(19) Europäisches Patentamt
European Patent Office
Office européen des brevets

(11) Veröffentlichungsnummer: **0 145 999**
**B1**

(12) # EUROPÄISCHE PATENTSCHRIFT

(45) Veröffentlichungstag der Patentschrift: **12.07.89**

(51) Int. Cl.⁴: **C 08 G 18/70**, C 08 G 18/80, C 08 G 18/65, C 08 G 18/08

(21) Anmeldenummer: **84114101.3**

(22) Anmeldetag: **22.11.84**

(54) **Bei Raumtemperatur lagerstabile, durch Hitzeeinwirkung härtbare Stoffmischungen auf Basis von Verbindungen mit reaktiven Wasserstoffatomen und Polyisocyanaten, Verfahren zu ihrer Herstellung und ihre Verwendung zur Herstellung von Formteilen.**

(30) Priorität: **29.11.83 DE 3343124**

(43) Veröffentlichungstag der Anmeldung: **26.06.85 Patentblatt 85/26**

(45) Bekanntmachung des Hinweises auf die Patenterteilung: **12.07.89 Patentblatt 89/28**

(84) Benannte Vertragsstaaten: **AT BE CH DE FR GB IT LI NL SE**

(56) Entgegenhaltungen:
**EP-A-0 062 780**
**EP-A-0 071 898**
**EP-A-0 103 323**
**DE-A-1 570 548**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Blum, Rainer, Bannwasserstrasse 58, D-6700 Ludwigshafen (DE)**
Erfinder: **Werner, Frank, Dr., Erschigweg 9, D-6730 Neustadt (DE)**
Erfinder: **Horn, Peter, Dr., Neue Stuecker 15, D-6900 Heidelberg (DE)**
Erfinder: **Osterloh, Rolf, Dr., Am Wehrhaus 16a, D-6718 Gruenstadt (DE)**
Erfinder: **Welz, Martin, Kaiserslauterer Strasse 231, D-6702 Bad Duerkheim (DE)**

**EP 0 145 999 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Herstellung von gegebenenfalls faserverkstärkten, zelligen oder kompakten Formteilen oder Halbzeug hierfür aus Verbindungen mit reaktiven Wasserstoffatomen und Polyisocyanaten wird in zahlreichen Patenten und Patentanmeldungen beschrieben.

Nach Angaben der DE-A-1 694 138 (GB-1 209 243) werden Polyurethan-Schaumstoff-Formteile hergestellt, indem man organische Polyisocyanate, Verbindungen mit reaktiven Wasserstoffatomen, Treibmittel und Katalysatoren bei Raumtemperatur mischt, das schaumfähige Reaktionsgemisch in ein temperiertes verschließbares Formwerkzeug in einer größeren Menge einbringt als zu dessen vollständiger Ausschäumung notwendig ist, und darin unter Verdichtung aufschäumen und aushärten läßt.

Zur Verbesserung der Festigkeitseigenschaften derartiger Schaumstoff-Formteile werden Fasern oder Fasermatten sowie räumlich gut durchschäumbare Armierungen in das Formwerkzeug eingelegt, die bei der nachfolgenden Polyadditionsreaktion und Verschäumung in das sich bildende Polyurethan-Formteil eingebettet werden.

Nachteilig an dieser Verfahrensweise ist, daß die Aufbaukomponenten dem Mischaggregat getrennt zugeführt und einzeln dosiert werden müssen und die Polyadditionsreaktion unmittelbar nach dem Vermischen der Aufbaukomponenten beginnt. Schwierigkeiten bereitet insbesondere das Einbringen von verstärkend wirkenden Fasermaterialien, beispielsweise Glasfasermatten, die vor Beginn der Reaktion mit der gegebenenfalls schaumfähigen Reaktionsmischung vollständig durchtränkt sein müssen.

Diese Schwierigkeiten können auch nicht durch das Zweikomponenten-Verfahren beseitigt werden, bei dem üblicherweise die Verbindungen mit reaktiven Wasserstoffatomen, Katalysatoren und gegebenenfalls Treibmittel, Hilfsmittel und Zusatzstoffe zu einer Komponente A vereinigt werden und als Komponente B die NCO-Gruppen aufweisenden Verbindungen eingesetzt werden. Vorteilhaft bei diesem Verfahren ist, daß nur zwei Komponenten gelagert, dosiert und gemischt werden müssen. Aufgrund der rasch ansteigenden Viskosität der Reaktionsmischung können jedoch langfaserige und flächige Verstärkungsmittel ungleichmäßig durchtränkt werden; dies führt zu Hohlräumen und Lunker, wodurch die Festigkeit der Endprodukte stark herabgesetzt wird.

Einkomponenten-Polyurethansysteme können durch Verwendung von verkappten Polyisocyanaten hergestellt werden. Diese Addukte sind relativ wenig thermostabil. Durch Erhitzen wird das Verkappungsmittel abgespalten und die Verbindung mit reaktiven Wasserstoffatomen addiert, die zum thermostabilsten Endprodukt führt. Dieses Verfahrensprinzip wird beispielsweise beschrieben im Kunststoff-Handbuch, Band VII, Polyurethane von R. Vieweg und A. Höchtlen, Carl Hanser Verlag, München, 1966, Seiten 11ff und angewandt für die Herstellung von Einbrennlacken gemäß den Publikationen DE-A-2 612 638 (US-4 068 086), DE-A-2 639 491 und DE-A-2 640 295.

Die Bedeutung derartiger Einkomponentensysteme wird im wesentlichen bestimmt durch die Art des Verkappungsmittels, das bei Lacksystemen verdampft und aus der Abluft isoliert werden muß oder das im erhaltenen hochmolekularen Polyadditionsprodukt gelöst verbleibt und dessen mechanische Eigenschaften beeinflußt.

Zur Beseitigung dieser Nachteile wurden verschiedene Methoden beschrieben. Nach Angaben der DE-A-1 570 548 (US-3 475 200) werden lagerbeständige, in der Wärme zu Polyurethan-Flächengebilden, -Überzügen oder -Beschichtungen aushärtbare Massen aus Polyolen, über 100°C schmelzenden Uretdiondiisocyanaten und über 80°C schmelzenden Kettenverlängerungsmitteln hergestellt, wobei die Korngröße des Uretdiondiisocyanats und Kettenverlängerungsmittel zu mindestens 80 % der Gesamtmenge unter 30 µm liegt.

Uretdiongruppen und endständig blockierte Isocyanatgruppen aufweisende organische Verbindungen werden gemäß DE-A-2 502 934 (GB-1 488 631) hergestellt durch Umsetzung eines Uretdiongruppen enthaltenden Polyisocyanats mit einer unterschüssigen Menge eines Kettenverlängerungsmittels mit einem Molekulargewicht von 18 bis 300 und 2 bis 3 gegenüber Isocyanaten reaktionsfähigen Gruppen. Das bei der Vernetzung freiwerdende Verkappungsmittel verbleibt auch hier im erhaltenen Polyadditionsprodukt.

Die DE-A-1 153 900 (US-3 248 370) beschreibt thermoplastische Polyurethane aus difunktionellen Hydroxylverbindungen, Uretdiondiisocyanat und einem zweiten Diisocyanat sowie Glykol oder Wasser als Kettenverlängerungsmittel bei Temperaturen unter 100°C, wobei die Aufbaukomponenten in solchen Mengenverhältnissen umgesetzt werden, daß praktisch alle freien NCO-Gruppen verbraucht werden.

Die in den genannten Publikationen erwähnten Uretdiongruppen enthaltenden Verfahrensprodukte basieren nach den Beispielen im allgemeinen auf dimeren Diisocyanato-toluolen und stellen bereits im nicht ausgehärteten Zustand hochmolekulare, thermoplastische Vorprodukte mit reaktiven Gruppen dar.

Erst oberhalb 140°C tritt unter Erweichung bzw. Schmelze der Vorprodukte eine Reaktion zu hochmolekularen oder vernetzten Polyadditionsprodukten ein, da bei diesen Temperaturen die Uretdiongruppe hinreichend reaktiv wird und sich die in der Polyurethanmatrix zunächst fixierten Reaktionspartner durch Diffusionsvorgänge treffen und damit addieren können.

Werden dagegen die in den obengenannten Publikationen angegebenen Aufbaukomponenten, wie z. B. dimeres Diisocyanato-toluol, Polyesterole, Polyetherole mit oder ohne niedermolekulare Kettenverlängerungsmittel, ohne Vormodifizierung vermischt, so erhält man hochmolekulare Produkte, die sich, wenn überhaupt, nur durch aufwendige Verarbeitungstechniken unter Vernetzung der Uretdiongruppen zu vernetzten Polyurethanen umsetzen lassen. Bedingt durch die relative Schwerlöslichkeit und den relativ hohen Schmelzpunkt (ca. 150°C) können aus dimeren Diisocyanato-toluolen und üblichen Polyolen und Kettenverlängerungsmitteln bei

einer Kennzahl von 100, Reaktionsmischungen mit bei Raumtemperatur mäßiger oder auch relativ langer Verarbeitungszeit hergestellt werden. Diese Mischungen sind jedoch nach Zusatz der erforderlichen Katalysatoren bei Raumtemperatur nicht mehr lagerstabil.

In der DE-A-2 941 051 (CA-A-1 147 123) wird ein Verfahren zur Herstellung von faserverstärkten Formkörpern beschrieben, bei dem Polyurethanmassen auf Basis von hochschmelzenden Polyisocyanaten, z. B. dimeren Diisocyanato-toluolen, in bestimmten Mengenverhältnissen der Aufbaukomponenten zur Reaktion gebracht werden. Nachteilig ist hierbei, daß die Polyurethanmassen nur einige Stunden bis zu maximal wenigen Tagen lagerstabil sind.

Lösungsmittelfreie Formmassen aus einem Hydroxylgruppen aufweisenden Prepolymeren mit 0,5 bis 7 Gew.-% freien Hydroxyl- und 5 bis 20 Gew.-% Urethangruppen, Polyisocyanaten mit einem Schmelzpunkt oberhalb von 100°C und organischen oder anorganischen Füllstoffen in bestimmten Mengenverhältnissen werden in der DE-A-2 921 162 (US-4 251 428) beschrieben. Nachteilig an dieser Methode ist, daß zur Herstellung der Formmassen als Verbindungen mit reaktiven Wasserstoffatomen nur spezielle Hydroxylgruppen aufweisende Prepolymere geeignet sind und die Produkte nur mäßig lagerstabil sind.

Auch die DE-A-2 842 805 (US-4 251 427) betrifft Beschichtungsmassen, die enthalten ein Polyisocyanat mit einem Schmelzpunkt über 100°C, ein Hydroxylgruppen enthaltendes Prepolymeres, hergestellt aus einem Polyisocyanat, einem teilweise verzweigten Polyether-polyol, einem Glykol mit einem Molekulargewicht von 62 bis 250 und einer Verbindung mit mindestens 2 Aminogruppen, ein Molekularsieb vom Natriumaluminiumsilikattyp und einen Aktivator. Wird die Beschichtungsmasse aus nicht vorverlängerten Polyolen hergestellt, so ist diese bei Verwendung von dimeren Diisocyanato-toluolen in Gegenwart von Katalysatoren nicht lagerstabil.

Langzeit-lagerbeständige, heterogene Einkomponentensysteme aus höhermolekularen Polyolen und gegebenenfalls durch Reaktion mit niedermolekularen Polyolen oder Polyaminen modifizierten Diphenylmethanuretdion-diisocyanaten sind Gegenstand der EP-A-71 898.

Die beschriebenen Form- oder Beschichtungsmassen weisen neben speziellen nachteiligen Eigenschaften, wie z. B. hohe Viskositäten, hohen Temperaturen zur Abspaltung des Blockierungsmittels und zur Vernetzung, den Nachteil auf, daß zu ihrer Herstellung nur ganz spezifische Polyisocyanate mit ganz spezifischen Polyolen kombiniert werden können.

Als Beschichtungs- und Verklebungsmittel sowie als Dichtungsmassen geeignete lagerstabile, hitzehärtbare Stoffmischungen, bei denen das Polyisocyanat in Form von diskreten Teilchen im Polyol vorliegt und an seiner Oberfläche desaktiviert ist, werden ferner in der EP-A-62 780 beschrieben. Entsprechend dem Verwendungsbereich werden nach diesem Verfahren jedoch nur weiche, klebrige Produkte erhalten, die aufgrund der mangelhaften mechanischen Eigenschaften nach der Aushärtung nicht zur Herstellung von Formteilen geeignet sind.

Hitzehärtbare Einkomponentensysteme für die Herstellung von Formkörpern auf Polyisocyanuratbasis sind bisher nicht bekannt geworden.

Die Aufgabe der vorliegenden Erfindung bestand darin, bei Raumtemperatur lagerstabile, durch Hitzeeinwirkung härtbare Stoffmischungen auf Basis von Verbindungen mit reaktiven Wasserstoffatomen und Polyisocyanaten zu entwickeln, die nach einem technisch praktikablen Verfahren kostengünstig zu kompakten oder zelligen, gegebenenfalls verstärkend wirkende Materialien enthaltenden Formteilen mit guten mechanischen Eigenschaften verarbeitet werden können. Sofern verstärkend wirkende Materialien eingesetzt werden, sollten diese auch mit einem hohen Gehalt im ausgehärteten Formteil enthalten sein können, wobei sichergestellt sein mußte, daß das verstärkend wirkende Material vor Beginn der Polyadditionsreaktion vollständig mit der Stoffmischung benetzt werden konnte.

Gegenstand der Erfindung ist somit ein Verfahren zur Herstellung von bei Raumtemperatur lagerstabilen, durch Hitzeeinwirkung zu Urethan-Isocyanurat- und gegebenenfalls Harnstoffgruppen aufweisenden Formteilen härtbaren Stoffmischungen, die enthalten

(a) ein oder mehrere polyole mit einem Molekulargewicht von 400 bis 10.000 und einer Funktionalität von 2 bis 8,

(b) 1 bis 50 Gew.-Teile, bezogen auf 100 Gew.-Teile (a), mindestens einer mehrfunktionellen Verbindung mit an aliphatische und/oder cycloaliphatische Reste gebundenen Hydroxylgruppen und/oder an aromatische Reste gebundenen Aminogruppen und einem Molekulargewicht von 62 bis 400 und

(c) ein bei Raumtemperatur festes organisches Polyisocyanat in Form von diskreten Teilchen mit Teilchendurchmessern von 0,1 bis 150 µm, die an der Teilchenoberfläche, durch chemische Reaktion mit einem Desaktivierungsmittel desaktiviert sind, sowie gegebenenfalls

(d) Katalysatoren,

(e) Treibmittel,

(f) verstärkend wirkende Materialien und

(g) Hilfsmittel und/oder Zusatzstoffe.

indem man zunächst 0,1 bis 20 Äquivalentprozent der insgesamt vorhandene Isocyanatgruppen des festen Polyisocyanats mit dem Desaktivierungsmittel in Gegenwart eines inerten Verdünnungsmittels umsetzt und das erhaltene oberflächenmodifizierte Polyisocyanat (c) in (a) und/oder (b) dispergiert und danach gegebenenfalls die restliche Menge der Komponente (a) bzw. (b) oder indem man das bei Raumtemperatur feste organische Polyisocyanat (c) in (a) und/oder (b) dispergiert und in situ 0,1 bis 20 Äquivalentprozent der insgesamt

vorhandenen Isocyanatgruppen des festen Polyisocyanats mit einem Desaktivierungsmittel umsetzt, welches gegenüber Isocyanatgruppen reaktiver ist als die funktionellen Gruppen der die kohärente Phase bildenden Komponente(n) (a) und/oder (b), und danach gegebenenfalls die restliche Menge (a) bzw. (b) sowie gegebenenfalls die Komponenten (d) bis (g) zusetzt, mit der Maßgabe, daß das Verhältnis von freien Isocyanatgruppen der desaktivierten Komponente (c) zu Hydroxylgruppen oder zur Summe aus Hydroxyl- und Aminogruppen der Komponenten (a) und (b) 60 : 1 bis 3 : 1 ist.

Gegenstände der Erfindung sind ferner die nach diesen Verfahren erhältlichen, bei Raumtemperatur lagerstabilen, durch Hitzeeinwirkung härtbaren Stoffmischungen, und die Verwendung dieser Stoffmischungen zur Herstellung von kompakten oder zelligen, gegebenenfalls verstärkend wirkende Materialien enthaltenden, Urethan-, Isocyanurat- und gegebenen Harnstoffgruppen aufweisenden Formteilen.

Die erfindungsgemäßen, bei Raumtemperatur lagerstabilen, wärmeaktivierbaren härtbaren Stoffmischungen sind fließfähige, pastenartige oder bei Temperaturen unterhalb ihrer Vernetzungstemperatur leicht aufschmelzbare, mehrphasige Formmassen. Die Einkomponenten-Systeme gewährleisten eine leichte und vollständige Benetzung der verstärkend wirkenden Materialien.

Zu den Aufbaukomponenten für die erfindungsgemäßen Stoffmischungen sowie deren Herstellung und Verwendung zur Herstellung von Urethan-, Isocyanurat- und gegebenenfalls Harnstoffgruppen aufweisenden, gegebenenfalls verstärkten, kompakten oder zelligen Formteilen ist folgendes auszuführen:

a) Als Polyole werden vorzugsweise lineare und/oder verzweigte Polyesterole und/oder Polyetherole mit Molekulargewichten von 400 bis 10 000, vorzugsweise 1000 bis 8000 und insbesondere 1200 bis 6000 verwendet. In Betracht kommen jedoch auch andere hydroxylgruppenhaltige Polymere mit den genannten Molekulargewichten, beispielsweise Polyesteramide, Polyacetale, wie Polyoxymethylene und Butandiol-formale, und Polycarbonate, insbesondere aliphatische Polycarbonate hergestellt aus Diphenylcarbonat und Hexandiol-1,6 durch Umesterung.

Geeignete Polyesterole besitzen eine Funktionalität von 2 bis 3,5, vorzugsweise 2 bis 3 und können beispielsweise hergestellt werden nach bekannten Verfahren aus organischen Dicarbonsäuren, vorzugsweise aliphatischen Dicarbonsäuren mit 2 bis 12, vorzugsweise 4 bis 6 Kohlenstoffatomen im Alkylenrest und mehrwertigen Alkoholen, vorzugsweise Diolen mit 2 bis 6 Kohlenstoffatomen. Als organische Dicarbonsäuren seien beispielhaft genannt: aliphatische Dicarbonsäuren, wie Bernstein-, Glutar-, Pimelin-, Undecandi-, Dodecandisäure und vorzugsweise Adipinsäure und Mischungen aus Bernstein-, Glutar- und Adipinsäure und aromatische Dicarbonsäuren, wie Phthalsäure, Isophthalsäure und Terephthalsäure. Verwendbar sind auch Dicarbonsäurederivate, wie z. B. Dicarbonsäureanhydride, Dicarbonsäureester von Alkoholen mit 1 bis 4 Kohlenstoffatomen, Dicarbonsäuredichloride und dimerisierte und trimerisierte ungesättigte Fettsäuren. Beispiele für zwei- und mehrwertige, insbesondere zweiwertige Alkohole sind: 1,2- bzw. 1,3-Propandiol, 1,4-Butandiol, 1,5-Pentandiol, 1,6-Hexandiol, 1,10-Decandiol, Dipropylenglykol, Glycerin, Trimethylolpropan und vorzugsweise 1,2-Ethandiol, Diethylenglykol, 1,4-Butandiol, 1,6-Hexandiol und Mischungen aus 1,4-Butandiol, 1,5-Pentandiol und 1,6-Hexandiol. Als mehrwertige Alkohole können ferner Alkanolamine, wie Triethanolamin, Triisopropanolamin, Diethanolamin u.a. verwendet werden. Auch Polyesterole aus Lactonen, z. B. ε-Caprolacton, oder Hydroxycarbonsäuren, z. B. ω-Hydroxycapronsäure können eingesetzt werden, insbesondere wenn sie zusätzliche Komponenten, wie z. B. Diethylenglykol oder 1,4-Butandiol, enthalten, um ihre hohe Kristallinität zu mindern. Sofern zur Herstellung der Polyesterole polyfunktionelle, insbesondere trifunktionelle Alkohole mitverwendet werden, muß deren Gehalt so gewählt werden, daß die Funktionalität der erhaltenen Polyesterole maximal 3,5, vorzugsweise 2 bis 3,0 ist.

Vorteilhafte Ergebnisse wurden erzielt mit und daher vorzugsweise verwendet werden solche Polyesterole, die durch Polykondensation eines Dicarbonsäuregemisches, das bezogen auf das Gesamtgewicht der genannten Dicarbonsäuren enthält: 20 bis 35 Gew.-% Bernsteinsäure, 35 bis 50 Gew.-% Glutarsäure und 20 bis 32 Gew.-% Adipinsäure, wobei die Summe 100 Gew.-% sein muß, und Alkoholmischungen aus 1,2-Ethandiol/1,4-Butandiol, 1,2-Ethandiol/Diethylenglykol, 1,2-Ethandiol/Trimethylolpropan, Diethylenglykol /Trimethylolpropan, 1,2-Ethandiol/Triisopropanolamin und Diethylenglykol/Triisopropanolamin und Adipinsäure und einer Mischung aus 1,4-Butandiol, 1,5-Pentandiol und 1,6-Hexandiol erhalten werden.

Die Polyesterole besitzen Molekulargewichte von 1000 bis 3000, vorzugsweise 1200 bis 2500.

Vorzugsweise als Polyole verwendet werden jedoch Polyetherole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 8, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-Mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin,

1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethylethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylolpropan, Pentaerythrit, Sorbit und Saccharose.

Die Polyetherole besitzen Molekulargewichte von 400 bis 10000, vorzugsweise von 1000 bis 8000 und insbesondere 1200 bis 6000. Sie können ebenso wie die Polyesterole einzeln oder in Form von Mischungen verwendet werden. Ferner können sie mit den Polyesterolen sowie den hydroxylgruppenhaltigen Polyesteramiden, Polyacetalen und Polycarbonaten gemischt werden.

b) Als mehrfunktionelle Verbindungen mit Molekulargewichten von 62 bis 400, vorzugsweise von 62 bis 300 und mit an aliphatische und/oder cycloaliphatische Reste gebundenen Hydroxylgruppen und/oder an aromatische Reste gebundenen Aminogruppen eignen sich die aus der Polyurethanchemie bekannten Kettenverlängerungs- oder Vernetzungsmittel. Die Verbindungen weisen eine Funktionalität von 2 bis 8, vorzugsweise 2 bis 3 auf und können einzeln oder in Form von Mischungen der gleichen Art oder von verschiedenen Arten verwendet werden. Als Beispiele für derartige Verbindungen seien genannt: mehrwertige Alkohole mit primären und/oder sekundären an aliphatische und/oder cycloaliphatische Reste gebundenen Hydroxylgruppen wie z. B. Ethandiol-1,2 Propandiol-1,3 und -1,2, 2,2-Dimethyl-propandiol-1,3, Butandiol-1,4, -1,3 und -2,3, Pentandiol-1,5, -2,5, Hexandiol-1,6, 1,4-Bis-hydroxy-methyl-cyclohexan, 1,4-Dihydroxycyclohexan, 1-Hydroxymethyl-4-hydroxycyclohexan, 4,4'-Dihydroxy-dicyclohexylmethan, 4,4'-(Dihydroxy-dicyclohexyl)-propan-2,2, Trimethylolethan, Trimethylolpropan, Hexantriol-1,2,6, Glycerin, Pentaerythrit, Chinit, Mannit, Sorbit, Formose, Formit und 1,4-Dihydroxyethylhydrochinon. Geeignet sind ferner tertiäre Aminogruppen gebunden enthaltende mehrwertige Alkohole wie z. B. n-Methyldiethanolamin, Triethanolamin und N,N'-Bis-hydroxyethylpiperazin. Besonders bewährt haben sich und daher vorzugsweise verwendet werden 2- und 3-wertige Alkohole, wie Ethandiol-1,2, Butandiol-1,4 und Hexandiol-1,6, Glycerin und Trimethylolpropan und niedermolekulare hydroxylgruppenhaltige Polyoxyalkylenpolyether auf Basis von Ethylenoxid und/oder 1,2-Propylenoxid und den vorgenannten mehrwertigen Alkoholen oder aliphatischen Diaminen mit Molekulargewichten von 60 bis 116 als Startermoleküle.

Als mehrfunktionelle Verbindungen sind insbesondere aromatische Polyamine geeignet sowie Aminogruppen aufweisende Heterocyclen, deren heterocyclischer Rest aromatischen Charakter besitzt.

Als aromatische Amine werden zur Herstellung der erfindungsgemäßen Stoffmischung vorzugsweise primäre aromatische Diamine verwendet.

Zweckmäßigerweise verwendet werden aromatische Diamine, deren primäre Aminogruppen gegenüber Polyisocyanaten keine durch elektronenanziehende Substituenten verursachte verminderte Reaktivität zeigen und vorteilhafterweise solche aromatische Diamine, deren primäre Aminogruppen sterisch gehindert sind. Insbesondere geeignet sind primäre aromatische Diamine der genannten Art, die bei Raumtemperatur flüssig und mit den Polyolen (a) unter den Verarbeitungsbedingungen ganz oder zumindest teilweise mischbar sind. Bewährt haben sich beispielsweise meta-Phenylendiamin und/oder vorzugsweise alkylsubstituierte meta-Phenylendiamine der Formeln

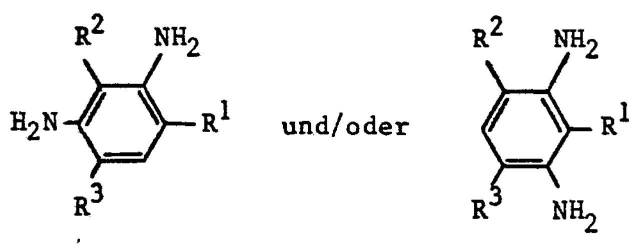

und/oder

in denen $R^1$ ein Wasserstoffatom oder ein linearer oder verzweigter Alkylrest mit 1 bis 10, vorzugsweise 1 bis 6 Kohlenstoffatomen ist und $R^2$ und $R^3$ gleiche oder verschiedene Alkylreste mit 1 bis 3 Kohlenstoffatomen, wie z. B. ein Methyl-, Ethyl-, Propyl- oder Isopropylrest sind. Geeignet sind insbesondere solche Alkylreste $R^1$, bei denen die Verzweigungsstelle am $C_1$-Kohlenstoffatom sitzt. Neben Wasserstoff seien als Alkylreste $R^1$ beispielhaft genannt: der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylendiamin-1,3.

Bewährt haben sich ferner Diamino-diphenylmethane, wie z. B. 4,4'- und/oder 2,4'-Diamino-diphenylmethan, 3,3'-di- und 3,3',5,5'-tetra-n-alkylsubstituierte 4,4'-Diamino-diphenylmethane wie z. B. 3,3'-Dimethyl-, 3,3'5,5'-Tetramethyl-, 3,3'-Diethyl-, 3,3',5,5'-Tetraethyl- und 3,3',5,5'-Tetra-n-propyl-4,4'-diamino-diphenylmethan.

Anwendung finden vorteilhafterweise Diamino-diphenylmethane der Formel

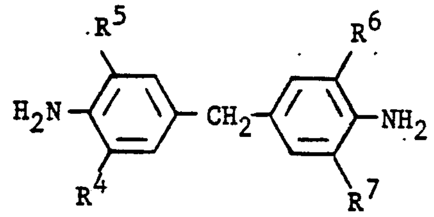

in der $R^4$, $R^5$, $R^6$ und $R^7$ gleich oder verschieden sind und einen Methyl-, Ethyl-, Propyl-, Isopropyl, sek.-Butyl- und tert.-Butylrest bedeuten, wobei jedoch mindestens einer der Reste ein Isopropyl- oder sek. Butylrest sein muß. Die 4,4'-Diamino-diphenylmethane können auch im Gemisch mit Isomeren der Formeln

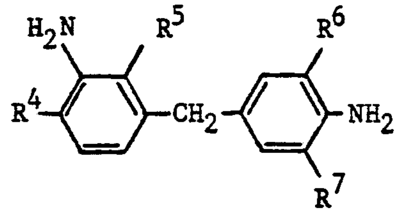

und/oder

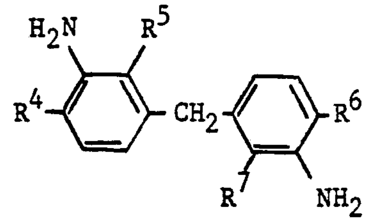

verwendet werden, wobei $R^4$, $R^5$, $R^6$ und $R^7$ die obengenannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5'-Dimethyl-3',5-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diaminodiphenylmethan.

Vorzugsweise verwendet werden folgende primären aromatischen alkylsubstituierten Phenylen-diamine und Diamino-diphenylmethane: 2,4-Diethyl-, 2,4-Dimethyl-phenylendiamin-1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert.butyl-, 2,4-Dimethyl-6-isooctyl- und 2,4-Dimethyl-6-cyclohexyl-phenylendiamin-1,3 sowie 3,3'-Diisopropyl-, 3,5-Dimethyl-3',5'-diisopropyl und 3,3',5,5'-Tetraisopropyl-4,4'-diamino-diphenylmethan.

Die primären aromatischen Diamine können einzeln oder in Form von Mischungen, beispielsweise aus gegebenenfalls alkylsubstituierten 1,3-Phenylendiaminen, Diamino-diphenylmethanen, 3,3'-di- und/oder 3,3',5,5'-tetraalkylsubstituierten 4,4'-Diamino-diphenylmethanen eingesetzt werden. Außerdem können die primären aromatischen Diamine mit maximal 50 Gew.-%, bezogen auf das Gesamtgewicht, primären aromatischen Tri- bis Pentaminen, wie z. B. Polyphenyl-polymethylen-polyaminen gemischt sein, wobei die aromatischen Polyamine zweckmäßigerweise ebenfalls mindestens in einer ortho-Stellung zu den Aminogruppen mit einem Alkylrest substituiert sind.

Als sek. aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek.-pentyl-, N,N'-Di-sek.-hexyl-, N,N'-Di-sek.-decyl-, N,N'-Dicyclohexyl-p- bzw. -m-phenylendiamin, N,N'-Dimethyl-, N,N'-Diethyl-, N,N'-Diisopropyl, N,N'-Di-sek.-butyl-, N,N'-Dicyclohexyl-4,4'-diamino-diphenylmethan und N,N'-Di-sek.-butyl-benzidin.

Bewährt als mehrfunktionelle Verbindungen (b) haben sich insbesondere Alkandiole mit 2 bis 6 Kohlenstoffatomen, Alkantriole mit 3 bis 6 Kohlenstoffatomen, alkylsubstituierte Phenylendiamine, 3,3'-di- und/oder 3,3',5,5'-tetraalkylsubstituierte 4,4-Diamino-diphenylmethane.

Die mehrfunktionellen Verbindungen (b) oder deren Gemische werden zur Herstellung der erfindungsgemäßen Stoffmischung in Mengen von 1 bis 50 Gew.-Teilen, vorzugsweise von 1 bis 20 Gew.-Teilen und insbesondere 2 bis 10 Gew.-Teilen, bezogen auf 100 Gew.-Teile Polyol (a) oder Polyolmischung verwendet.

c) Als organische Polyisocyanate kommen aliphatische, cycloaliphatische, araliphatische und vorzugsweise aromatische, bei Raumtemperatur feste, mehrwertige Isocyanate in Betracht. Sofern die mehrwertigen Isocyanate bei Raumtemperatur flüssig sind, werden sie durch eine chemische Umsetzung in sogenannte modifizierte, mehrwertige, bei Raumtemperatur feste Polyisocyanate übergeführt. Beispielhaft genannt seien unmodifizierte und Ester-, Harnstoff-, Biuret-, Allophanat-, Carbodiimid- und vorzugsweise Urethan-, Uretdion- und/oder Isocyanuratgruppen enthaltende Di- und/oder Polyisocyanate auf Basis von Alkylendiisocyanaten mit 2 bis 12, vorzugsweise 4 bis 6 Kohlenstoffatomen im Alkylenrest, wie 1,2-Ethan-, 1,4-Butan-, 2-Ethyl-1,4-Butan-, 1-Methyl-1,5-pentan-, 1,6-Hexan-, 2-Ethyl-1,6-hexan-, 1,8-Octan-, 1,10-Decan- und 1,12-Dodecan-diisocyanat,

cycloaliphatischen Diisocyanaten, wie Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 4,4'-, 2,2'- und 2,4'-Dicyclohexylmethan-diisocyanat sowie beliebige Gemische aus mindestens zwei dieser Isomeren; araliphatischen Diisocyanaten, wie 1,2-, 1,3- und 1,4-Xylylen-diisocyanat und aromatischen Polyisocyanaten, wie 4,4'-, 2,4- und 2,2'-Diisocyanato-diphenylmethan und die entsprechenden Gemische aus mindestens zwei dieser Isomeren, 2,4- und 2,6-Diisocyanato-toluol und die entsprechenden Isomerengemische, 1,5-Diisocyanato-naphthalin, Polyphenyl-polymethylen-polyisocyanate und Gemische aus den isomeren Diisocyanato-diphenylmethanen und Polyphenyl-polymethylen-polyisocyanaten. Die genannten Di- und Polyisocyanate können einzeln oder in Form von Mischungen eingesetzt werden.

Besonders bewährt haben sich und daher vorzugsweise verwendet werden 4,4'-Diiso-cyanato-diphenylmethan und 1,5-Naphthalin-diisocyanat und die mit Urethan-, Uretdion- und/oder Isocyanuratgruppen modifizierten Di- und/oder Polyisocyanate auf Basis von 1,6-Hexan-diisocyanat, 1-Isocyanato-3,3,5-trimethyl-5-isocyanatomethyl-cyclohexan, 2,4'-, 4,4'-Diisocyanato-diphenylmethan und insbesondere 2,4- und/oder 2,6-Diisocyanato-toluol.

Modifizierte Polyisocyanate der bevorzugten Art sind insbesondere Additionsprodukte aus Diisocyanatotoluolen und Trimethylolpropan, trimerisierte Isocyanuratgruppen enthaltende Diisocyanato-toluole und Diisocyanato-diphenylmethane und dimerisierte Uretdiongruppen aufweisende Diisocyanato-toluole, 4,4'- und/oder 2,4'-Diisocyanato-diphenylmethane.

Die erfindungsgemäßen Stoffmischungen aus einem oder mehreren Polyolen (a), mindestens einer mehrfunktionellen Verbindung (b) und Polyisocyanaten (c) enthalten die Polyisocyanate in Form diskreter Teilchen mit Teilchendurchmessern von 0,1 bis 150 µm, vorzugsweise 1 bis 50 µm, dispergiert in (a) und (b).

Um zu verhindern, daß bei Raumtemperatur eine Polyadditionsreaktion zwischen den Polyisocyanaten (c) und den Polyolen (a) und mehrfunktionellen Verbindungen (b) eintritt, werden die dispergierten Polyisocyanatteilchen an ihrer Oberfläche desaktiviert. Das Desaktivierungsmittel wird hierzu so gewählt, daß es an der Oberfläche der Polyisocyanatteilchen durch chemische Reaktion gebunden wird und auf diese Weise eine Phasentrennung zwischen den Polyisocyanatteilchen und den übrigen Komponenten, insbesondere den Polyolen (a) und mehrfunktionellen Verbindungen (b) bewirkt wird.

Für die Desaktivierung werden 0,1 bis 20, vorzugsweise 0,1 bis 10 und insbesondere 0,3 bis 5 Äquivalentprozent der insgesamt vorhandenen Isocyanatgruppen mit dem Desaktivierungsmittel zur Reaktion gebracht.

Als Desaktivierungsmittel kommen in Frage: Wasser, primäre oder sekundäre aliphatische Mono- und Polyamine, Mono- und Polyalkohole. Besonders gut geeignet sind längerkettige aliphatische Monoamine, z. B. Stearylamin, die zu einer Art aufgepfropfter Emulgatoren abreagieren. Höhermolekulare aliphatische Polyamine, wie z. B. Polyamidamine, und hydroxylterminierte Polymere, wie z. B. hydroxylterminierte Polybutadienöle, reagieren unter Ausbildung aufgepfropfter Schutzkolloide. Besonders geeignet zur Desaktivierung der Isocyanatgruppen an der Oberfläche der Polyisocyanatteilchen, d. h. zur Stabilisierung der Isocyanat/Polyol/mehrfunktionelle Verbindung-Dispersionen, sind auch Reaktionen, die auf den Isocyanaten zu Harnstoff bzw. Polyharnstoffstrukturen führen, weil diese in den meisten Polyolen und organischen Lösungsmitteln unlöslich sind. Solche Harnstoffe bzw. Polyharnstoffe bildenden Reagenzien sind Wasser und primäre oder sekundäre aliphatische Amine, wobei kurzkettige aliphatische Diamine, wie Ethylendiamin oder Propylendiamin bevorzugt sind. Die aus diesen kurzkettigen aliphatische Diaminen gebildeten Polyharmstoffe sind organophober als die aus längerkettigen Diaminen gebildeten und wirken deshalb in manchen Fällen besser stabilisierend.

Als Desaktivierungsmittel kommen ferner in Betracht: Verbindungen, die Carboxylgruppen enthalten, wie z. B. Homo- und Copolymerisate der Acrylsäure, Methacrylsäure, Maleinsäure und anderer polymerisierbarer Säuren, saure Polykondensationsprodukte, wie z. B. mit Säureüberschuß hergestellte Polyester, saure Polymere, die durch Alkoholyse der Addukte von Maleinsäureanhydrid an ungesättigten Polymeren, z. B. Leinöl oder Polybutadienöl, erhalten werden;

Amidgruppen enthaltende Verbindungen, wie z. B. lösliche Polyamide und Polymerisate von Acrylamid und Methacrylamid oder Copolymerisate von Acrylamid und/oder Methacrylamid mit Acrylsäure- und/oder Methacrylsäureestern;

Polyhydrazide, die durch Hydrazinolyse von Polyacrylaten erhalten werden und deren Herstellung z. B. von M. Hartmann, R. Dowbenko, U.T. Hockswender in Organic Coatings + Applied Polymer Science 46, 1982, Seite 429 mit 432 beschrieben wird.

Geeignet sind auch Verbindungen mit alkoholischen Hydroxylgruppen, vorzugsweise solche, deren Löslichkeit in Wasser unter 1 Gew.-% liegt.

Die genannten Desaktivierungsmittel weisen im allgemeinen Molekulargewichte von 18 bis 1.000.000, vorzugsweise von 300 bis 5000 auf.

Vorzugsweise als Desaktivierungsmittel verwendet werden primäre und sekundäre aliphatische Amine, Wasser oder Verbindungen, die Carboxyl-, Hydrazid-, Amid- oder alkoholische Hydroxylgruppen enthalten, wobei als Verbindungen mit alkoholischen Hydroxylgruppen insbesondere solche geeignet sind, die eine Löslichkeit in Wasser von kleiner als 1 Gew.-% besitzen.

Die Herstellung der erfindungsgemäßen Stoffmischungen erfolgt zweckmäßigerweise unter Verwendung üblicher Dispergier- und Mischaggregate. Das Polyisocyanat wird hierzu vorteilhafterweise bei Temperaturen unter 40°C vorzugsweise bei Temperaturen von 0 bis 25°C in mehrfunktionellen Verbindungen (b), den

Mischungen aus Polyolen (a) und mehrfunktionellen Verbindungen (b) oder vorzugsweise den Polyolen (a) dispergiert, wobei die Komponenten (a) und/oder (b) entweder bereits die gesamte Menge eines oder mehrerer der Desaktivierungsmittel enthalten oder mindestens eines der Desaktivierungsmittel kurz nach dem Dispergiervorgang der Stoffmischung einverleibt wird. Selbstverständlich können beide Verfahrensweisen auch miteinander kombiniert werden, wobei die Komponenten (a) und/oder (b) beispielsweise einen Teil des Desaktivierungsmittels enthalten, während der andere Teil desselben oder eines anderen Desaktivierungsmittels der Stoffmischung nach der Polyisocyanatdispergierung hinzugefügt wird.

Diese sogenannte in situ Stabilisierung wird vorzugsweise durchgeführt, wenn das Desaktivierungsmittel eine wesentlich größere Reaktivität gegenüber Polyisocyanaten besitzt als die die kohärente Phase bildenden Komponenten (a) und/oder (b). Da Polyisocyanate mit primären aliphatischen Aminen erheblich rascher reagieren als mit primären, sterisch gehinderten aromatischen Aminen oder primäre Hydroxylgruppen aufweisenden Polyolen, können durch Einrühren von Polyisocyanaten, vorzugsweise von pulverförmigen Polyisocyanaten, wie 1,5-Naphthalin-diisocyanat, 4,4'-Diisocyanato-diphenyl-methan, dimerisierten Uretdiongruppen enthaltenden Diisocyanato-diphenylmethanen und insbesondere dimerisierten uretdiongruppenhaltigen Diisocyanato-toluolen in aliphatische Polyamine als Desaktivierungsmittel enthaltenden Polyolen, vorzugsweise Polyetherole, unmittelbar bei Raumtemperatur lagerstabile Stoffmischungen erhalten werden.

Ein zusätzlicher Vorteil dieses Verfahrens wird durch die Bildung von Harnstoffverbindungen an der Oberfläche der Polyisocyanatteilchen erzielt, die bei höheren Temperaturen mit weiterem Polyisocyanat zu Biuretgruppen aufweisenden Polyadditionsprodukten weiterreagieren, d. h. das Desaktivierungsmittel wird in das hochmolekulare Polyadditionsprodukt eingebaut und führt zu keinen Inhomogenitätsbereichen im Formteil.

Wie bereits dargelegt wurde, können die Polyisocyanate in den Polyolen (a), den mehrfunktionellen Verbindungen (b) oder Mischungen aus beiden Komponenten dispergiert werden. Wird als kohärente Phase nur die Komponente (b) oder vorzugsweise (a) verwendet, so wird das Polyol (a) bzw. die mehrfunktionelle Verbindung (b) den Dispersionen aus Polyisocyanat und (b) bzw. (a) einverleibt.

Nach einem anderen Verfahren zur Herstellung der erfindungsgemäßen Stoffmischungen wird das Polyisocyanat zunächst in Gegenwart von einem oder mehreren inerten Verdünnungsmitteln mit dem Desaktivierungsmittel behandelt und danach das behandelte, an der Teilchenoberfläche desaktivierte Polyisocyanat in die Komponente (a) und/oder (b) eingebracht und danach gegebenenfalls die restliche Komponente (a) bzw. (b) zugemischt. Die inerten Verdünnungsmittel können nach der Desaktivierung der Polyisocyanate aus der Reaktionsmischung oder danach aus der Stoffmischung abgetrennt werden.

Die Desaktivierungsreaktion kann durch den Zusatz von Katalysatoren gesteuert werden. Geeignet als Desaktivierungskatalysatoren sind beispielsweise die bekannten Polyurethankatalysatoren zur Katalyse der Polyisocyanat-Polyol-Polyaddition.

Zur Herstellung der erfindungsgemäßen Stoffmischungen können die Mengenverhältnisse von Polyisocyanaten zu den Komponenten (a) und (b) in breiten Grenzen, beispielsweise in Verhältnissen von freien Isocyanatgruppen zu Hydroxylgruppen oder Summe aus Hydroxyl- und Aminogruppen von 3 bis 60 : 1, vorzugsweise 10 bis 6 : 1, variiert werden. Die Stoffmischungen können direkt zu Urethan- und Isocyanuratgruppen enthaltenden Formteilen verarbeitet oder als sogenannte Masterbatch verwendet und vor der Verarbeitung mit Polyolen (a) oder mehrfuntionellen Verbindungen (b) im Rahmen des oben angegebenen Äquivalentverhältnisses verdünnt werden.

Die Stoffmischungen aus den Aufbaukomponenten (a) bis (c) sind bei 25°C mehr als einen Monat lagerstabil, d. h. innerhalb dieses Zeitraums tritt eine die bestimmungsgemäße Verwendung beeinträchtigende Produktveränderung nicht ein.

Zur Herstellung von zelligen oder kompakten, gegebenenfalls verstärkten Formteilen werden den Stoffmischungen gegebenenfalls als zusätzliche Aufbaukomponenten

d) Katalysatoren,
e) Treibmittel,
f) verstärkend wirkende Materialien und
g) Hilfsmittel und/oder Zusatzstoffe
einverleibt.

d) Geeignete Katalysatoren zur Beschleunigung der Polyurethanbildung zwischen den Polyolen, den mehrfunktionellen Verbindungen, gegebenenfalls Wasser und den Polyisocyanaten sind beispielsweise tertiäre Amine, wie Dimethylbenzylamin, N,N,N',N'-Tetramethyl-diamino-diethylether, Bis-(dimethyl-amino-propyl)-harnstoff, N-Methyl- bzw. N-Ethylmorpholin, Dimethylpiperazin, 1,2-Dimethylimidazol, 1-Aza-bicyclo-(3,3,0)-octan und vorzugsweise Triethylendiamin, Metallsalze, wie Zinndioctoat, Bleioctoat, Zinn-diethylhexoat und vorzugsweise Zinn-(IV)-salze wie Dibutylzinndilaurat, Dibutylzinndiacetat, Tetrabutyl-zinndisulfid und Bis-(tri-n-butylzinn)oxid sowie insbesondere Mischungen aus tertiären Aminen und organischen Zinnsalzen. Vorzugsweise verwendet werden 0,1 bis 5,0 Gew % Katalysator auf Basis tertiärer Amine und/oder 0,01 bis 1,0 Gew.-% Metallsalze, bezogen auf das Gewicht der Komponenten (a) bis (c).

Zur Herstellung von Urethan- und Isocyanuratgruppen enthaltenden Formteilen haben sich die üblichen Cyclisierungs- und Polymerisationskatalysatoren für Polyisocyanate bewährt. Als Beispiele seien genannt: starke Basen, wie quaternäre Ammoniumhydroxide, beispielsweise Benzyltrimethylammoniumhydroxid; Alkalimetallhydroxide, beispielsweise Natrium- oder Kaliumhydroxid; Alkalimetallalkoxide, beispielsweise

Natriummethylat und Kaliumisopropylat; Trialkylphosphine, beispielsweise Triethylphosphin; Alkylaminoalkylphenole, beispielsweise 2,4,6-Tris-(dimethylaminomethyl)-phenol; 3- und/oder 4-alkylsubstituierte Pyridine, beispielsweise 3- oder 4-Methylpyridin; metall-organische Salze, beispielsweise Tetrakis-(hydroxyethyl)-natriumborat; Friedel-Crafts-Katalysatoren, beispielsweise Aluminiumchlorid, Eisen-(III)-chlorid, Borfluorid und Zinkchlorid und Alkalimetallsalze von schwachen organischen Säuren und Nitrophenolaten, beispielsweise Kaliumoctoat, Kalium-2-ethyl-hexoat, Kalium-benzoat, Natriumpikrat und Phthalimid-kalium. Vorzugsweise verwendet werden die stark basischen N,N',N"-Tris-(dialkylaminoalkyl)-s-hexahydrotriazine, beispielsweise das N,N',N"-Tris-(dimethylaminopropyl)-s-hexahydrotriazin.

Die geeignete Menge an Katalysator zur Herstellung der Urethan- und Isocyanuratgruppen enthaltenden Formteile ist abhängig von der Wirksamkeit des in Frage kommenden Katalysators sowie von der Menge der gegebenenfalls mitverwendeten Polyurethankatalysatoren. Im allgemeinen hat es sich als zweckmäßig erwiesen, 0,1 bis 5 Gew.-Teile, vorzugsweise 0,5 bis 1,5 Gew.-Teile Cyclisierungs- und Polymerisationskatalysator für jeweils 100 Gew.-Teile der Stoffmischung aus den Komponenten (a) bis (c) zu verwenden.

Zu Treibmitteln, welche zur Herstellung der zelligen, gegebenenfalls verstärkend wirkende Materialien enthaltenden Formteile verwendet werden, gehört Wasser, das mit freien Isocyanatgruppen unter Bildung von Kohlendioxid reagiert. Die Wassermengen, die üblicherweise eingesetzt werden, betragen 0,1 bis 2,0 Gew.-Teile, vorzugsweise 0,2 bis 0,8 Gew.-Teile, bezogen auf 100 Gew.-Teile der Stoffmischung aus den Komponenten (a) bis (c). Gegebenenfalls können auch größere Wassermengen verwendet werden.

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-2,3,3-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zelligen Formteilen hängt ab von der Dichte, die man erreichen will, sowie gegebenenfalls von der Mitverwendung von Wasser. Im allgemeinen liefern Mengen von 1 bis 15 Gew.-Teilen, bezogen auf 100 Gew.-Teile der Stoffmischung aus den Komponenten (a) bis (c), zufriedenstellende Ergebnisse.

f) Als verstärkend wirkende Materialien sind die an sich bekannte üblichen anorganischen und organischen Füllstoffe, Beschwerungsmittel, Mittel zur Verbesserung des Abriebverhaltens in Anstrichfarben, Beschichtungsmitteln usw. und insbesondere anorganische und/oder organische Fasern sowie faserhaltige Flächengebilde zu verstehen.

Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche faserförmige Mineralien wie Asbest und Wollastonit. Als organische Füllstoffe kommen beispielsweise in Betracht: Kohle, Melamin, Kolophonium, Additionsprodukte aus Polyaminen und/oder Hydrazin und Monoisocyanaten oder Monoaminen und Polyisocyanaten, Cyclopentadienharze und vorzugsweise Pfropfpolymerisate auf Styrol-Acrylnitrilbasis, die durch in situ Polymerisation von Acrylnitril-Styrol-Mischungen in Polyetherolen analog den Angaben der deutschen Patentschriften 1 111 394, 1 222 669 (US-3 304 273, 3 383 351, 3 523 093), 1 152 536 (GB-1 040 452) und 1 152 537 (GB-987 618) hergestellt werden sowie Fillerpolyole, zu deren Herstellung olefinisch ungesättigte Monomere in wässerigem Medium polymerisiert werden zu wässerigen Polymerdispersionen, aus denen das Wasser abgetrennt und das Polymerisat im Polyol dispergiert wird.

Die anorganischen und/oder organischen Füllstoffe, die einzeln oder als Gemische verwendet werden können, werden in Mengen von 0 bis 500 Gew.-%, vorzugsweise 0,5 bis 200 Gew.-% und insbesondere 5 bis 150 Gew.-%, bezogen auf das Gewicht der Stoffmischung aus den Komponenten (a) bis (c) eingesetzt.

Wie bereits dargelegt wurde, kommen als verstärkend wirkende Materialien vorzugsweise in Betracht: anorganische Fasern wie z. B. Stein- oder Schlackenwolle, Asbest-, Bor-, Aluminiumoxid-, Kohlenstoff-, Stahl- und vorzugsweise Glasfasern, organische Fasern wie z. B. Wolle, Cellulose-, Polyester-, Polyamid-, Polyacryl-, Polyvinylalkohol-, Polycarbonat- und Polyurethanfasern und/oder faserhaltige Flächengebilde mit Flächengewichten von 100 bis 1200 g/m², vorzugsweise 150 bis 900 g/m², die bestehen aus genadelten oder ungenadelten Matten, Vliesen, Filzen oder Geweben aus Textil-, Kunststoff-, Asbest-, Kohlenstoff-, Metall- oder vorzugsweise Glasfasern, wobei die bevorzugt verwendeten Glasfasermatten Flächengewichte von 100 bis 1200 g/m², insbesondere von 400 bis 600 g/m² besitzen.

Das Verhältnis von Stoffmischung der Komponenten (a) bis (c) und Fasern und/oder faserhaltigen Flächengebilden wird hierbei so gewählt, daß die ausgehärteten Formteile 0 bis 90 Gew.-%, vorzugsweise 10 bis 70 Gew.-% und insbesondere 20 bis 60 Gew.-% mindestens einer verstärkend wirkenden Faser oder eines faserhaltigen Flächengebildes, vorzugsweise aus Glasfasern, enthalten.

g) Die erfindungsgemäßen Stoffmischungen können gegebenenfalls auch noch Hilfsmittel und/oder Zusatzstoffe enthalten. Genannt seien beispielweise oberflächenaktive Substanzen, Schaumstabilisatoren,

Zellregler, Farbstoffe, Pigmente, Flammschutzmittel, Hydrolyseschutzmittel, fungistatisch und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diethylamin oder stearinsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gew.-Teilen, bezogen auf 100 Gew.-Teile der Stoffmischung aus den Komponenten (a) bis (c) angewandt.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat, roter Phosphor und Calciumsulfat sowie Veresterungsprodukte niedermolekularer Polyole und halogenierter Phthalsäurederivate zum Flammfestmachen der Formteile verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Stoffmischung aus den Komponenten (a) bis (c) zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Die gegebenenfalls in der erfindungsgemäßen Stoffmischung enthaltenen Aufbaukomponenten (d) bis (g) können der Mischung aus den Komponenten (a) bis (c) mit Hilfe von üblichen Dosier- und Mischvorrichtungen, beispielsweise durch Injektions- oder Rührwerksvermischung, einverleibt und homogen verteilt werden.

Auf die gleiche Weise können auch geschnittene Fasern unterschiedlicher Länge und Durchmesser, beispielsweise mit Längen von 100 bis 400 μm, vorzugsweise von 200 bis 250 μm, und Durchmessern von 5 bis 20 μm, vorzugsweise 8 bis 15 μm, eingebracht werden, wobei das Längen-/Durchmesserverhältnis vorzugsweise größer als 30 : 1 ist.

Bei Verwendung von faserhaltigen Flächengebilden kann die Stoffmischung aus den Komponenten (a) bis (c) sowie gegebenenfalls (d) bis (g) auf das Flächengebilde aufgesprüht oder gegossen werden oder die Flächengebilde werden einzeln oder in mehreren Schichten mit der Stoffmischung getränkt. Da die Stoffmischung erst bei höheren Temperaturen reagiert, können die verstärkend wirkenden Materialien, insbesondere Fasern oder faserhaltige Flächengebilde, unterhalb der Härtungs- bzw. Reaktionstemperatur optimal mit der Stoffmischung behandelt werden.

Die erfindungsgemäßen, bei Raumtemperatur lagerstabilen, durch Hitzeeinwirkung härtbaren Stoffmischungen finden Verwendung zur Herstellung von kompakten oder zelligen, unverstärkten oder verstärkend wirkende Materialien enthaltenden Urethan-, Isocyanurat- und ggf. Harnstoffgruppen aufweisenden Formteilen.

Die Herstellung der Formteile wird in offenen oder geschlossenen, vorzugsweise temperierbaren metallischen Formwerkzeugen, beispielsweise in Stahl-, Guß- oder Aluminiumformen bei Temperaturen von 70 bis 200°C, vorzugsweise 100 bis 180°C, durchgeführt, wobei zur Herstellung von zelligen Formteilen Verdichtungsgrade von 1 bis 10, vorzugsweise 1,5 bis 5 Anwendung finden. Die Verweilzeit im Formwerkzeug ist abhängig u.a. von der Zusammensetzung der Stoffmischung, der Reaktionstemperatur sowie von der Größe und Raumform des Formteils und beträgt durchschnittlich 0,25 bis 10 Minuten, vorzugsweise 0,5 bis 2 Minuten.

Zur Herstellung der Formteile wird die homogene Stoffmischung mit einer Temperatur von unter 50°C, vorzugsweise 10 bis 30°C in das offene, gegebenenfalls erwärmte Formwerkzeug eingefüllt und in dem offenen oder geschlossenen Formwerkzeug bei den genannten Reaktionstemperaturen gegebenenfalls verschäumt und aushärten gelassen.

Nach einer anderen Verfahrensweise, die vorzugsweise bei Verwendung von faserhaltigen Flächengebilden als verstärkend wirkende Materialien Anwendung findet, wird das faserhaltige Flächengebilde in das offene Formwerkzeug eingelegt und dort mit der Stoffmischung besprüht, übergossen, getränkt oder nach einer anderen bekannten Methode behandelt. Danach wird das Formwerkzeug verschlossen und die Stoffmischung im genannten Temperaturbereich von 70 bis 200°C, gegebenenfalls unter Verdichtung, zur Reaktion gebracht.

Sofern es gewünscht wird, können die Formteile in dem Formwerkzeug bei der Verformung und Aushärtung gleichzeitig - bei der Plattenherstellung ein-, beid- oder allseitig - mit einer Trennfolie oder einem Dekormaterial beschichtet werden. Die Innenwände des offenen Formwerkzeugs werden hierzu mit den genannten Materialien teilweise oder vollständig belegt und danach die Stoffmischung oder das faserhaltige Flächengebilde und anschließend die Stoffmischung in das Formwerkzeug eingebracht. Die Aushärtung oder Verschäumung und Aushärtung erfolgt in der oben beschriebenen Weise.

Nach einer anderen Herstellungsvariante kann die Stoffmischung zwischen Trennfolien auf Temperaturen erhitzt werden, die einerseits nicht ausreichen zur Erzielung einer vollständigen Vernetzung der Stoffmischung, andererseits die Stoffmischung jedoch soweit verfestigen, daß sie mechanisch bearbeitbar wird. Auf diese

Weise hergestellte Platten oder Profile sind beispielsweise zuschneidbar und können zu einem späteren Zeitpunkt durch Erhitzen auf die Reaktionstemperatur, z. B. in einer beheizten Preßform, endgültig verformt und ausgehärtet werden.

Als Trennfolie oder nicht- oder direkt eingefärbte oder bedruckte Dekormaterialien seien beispielhaft genannt: Gewebe oder Vliese aus Kunst- oder Naturfasern, Folien aus Metall, wie z. B. Aluminium, Kupfer, Messing, Gold oder Stahlblech, Polyvinylchlorid, Acrylnitril-Butadien-Styrol-Polymerisaten, Polyamid, Polyester, Polyethylen, Polypropylen, Celluloseestern oder -mischestern, Karton oder Papierbahnen sowie eingedickten Prepregs aus ungesättigten Polyesterharzen.

Die aus den erfindungsgemäßen Stoffmischungen erhältlichen kompakten, gegebenenfalls verstärkten Formteile besitzen eine Dichte von 1,0 bis 1,9 $g/cm^3$, vorzugsweise von 1,0 bis 1,35 $g/cm^3$ und die zellhaltigen, gegebenenfalls verstärkten Formteile eine Dichte von 0,1 bis 1,5 $g/cm^3$, vorzugsweise von 0,2 bis 0,12 $g/cm^3$.

Die Formteile finden Verwendung als selbsttragende Verkleidungsteile, Versteifungsteile oder Formkörper in der Schienenfahrzeug-, Kraftfahrzeug- und Flugzeugindustrie, z. B. als Dachhimmel, Türen- und Wandverkleidungen, Armaturentafeln, -bretter, Karosserieteile wie Kotflügel, Spoiler, Radkastenverbreiterung, Motorraumabdeckung sowie technische Gehäuseteile, Laufrollen u. a. Die Produkte können ferner in der Möbelindustrie, der Phono- und Fernsehtechnik und der Bauindustrie als Verkleidungen eingesetzt werden. Die zellhaltigen Formteile finden beispielsweise als Armlehnen, Kopfstützen, Sicherheitsabdeckungen im Automobil- oder Flugzeuginnenraum sowie als Motorrad- und Fahrradsättel, Sitzkissen, Deckschichten in Verbundschaumstoffen oder Schuhsohlen Anwendung.

**Beispiel 1**

Herstellung eines stabilen Isocyanat-Master-batch

50 Gew.-Teile dimeres Uretdiongruppen enthaltendes 2,4-Toluylen-diisocyanat wurden in 50 Gew.-Teilen Polyoxypropylenglykol mit einem Molekulargewicht von 2000 bei 23°C mit Hilfe eines Dissolvers mit 1000 UpM 5 Minuten lang dispergiert. In die erhaltene Dispersion wurden über einen Zeitraum von 2 Minuten 1,5 Gew.-Teile eines Polyamidamins (®Euretek 505 der Firma Schering, Berlin) eindispergiert. Man erhielt eine gutfließende, pastenartige Dispersion, die bei Raumtemperatur mehr als 6 Monate lagerstabil war.

**Vergleichsbeispiel A**

Man verfuhr analog den Angaben von Beispiel 1, desaktivierte die Polyisocyanatpartikel jedoch nicht mit dem Polyamidamin. Die erhaltene pastenartige Dispersion wurde nach einigen Tagen zähflüssig und erstarrte innerhalb von 10 Tagen.

**Beispiel 2**

Herstellung eines stabilen Master-batch

Man verfuhr analog den Angaben von Beispiel 1, ersetzte das Polyoxypropylenglykol jedoch durch 50 Gew.-Teile eines Glycerin als Startermolekül enthaltenden Polyoxyethylen-polyoxypropylen-polyols mit einem Molekulargewicht von 4600. Die gut fließfähige Dispersion war mehr als 6 Monate bei Raumtemperatur lagerstabil.

**Vergleichsbeispiel B**

Man verfuhr analog den Angaben von Beispiel 2, fügte jedoch kein Polyamidamin hinzu. Die zunächst fließfähige Paste erstarrte nach einigen Tagen Lagerung bei Raumtemperatur zu einer quarkartigen, bröseligen Masse.

**Patentansprüche**

1. Verfahren zur Herstellung von bei Raumtemperatur lagerstabilen, durch Hitzeeinwirkung zu Urethan-, Isocyanurat- und gegebenenfalls Harnstoffgruppen aufweisenden Formteilen härtbaren Stoffmischungen, enthaltend

(a) ein oder mehrere Polyole mit einem Molekulargewicht von 400 bis 10.000 und einer Funktionalität von 2 bis 8,

(b) 1 bis 50 Gew.-Teile, bezogen auf 100 Gew.-Teile (a), mindestens einer mehrfunktionellen Verbindung mit an aliphatische und/oder cycloaliphatische Reste gebundenen Hydroxylgruppen und/oder an aromatische Reste gebundenen Aminogruppen und einem Molekulargewicht von 62 bis 400 und

(c) ein bei Raumtemperatur festes organisches Polyisocyanat in Form von diskreten Teilchen mit Teilchendurchmessern von 0,1 bis 150 µm, die an der Teilchenoberfläche durch chemische Reaktion mit einem Desaktivierungsmittel desaktiviert sind, sowie gegebenenfalls

(d) Katalysatoren,

(e) Treibmittel,

(f) verstärkend wirkende Materialien und

(g) Hilfsmittel und/oder Zusatzstoffe,

indem man zunächst 0,1 bis 20 Äquivalentprozent der insgesamt vorhandenen Isocyanatgruppen des festen Polyisocyanats mit dem Desaktivierungsmittel in Gegenwart eines inerten Verdünnungsmittels umsetzt und das erhaltene oberflächenmodifizierte Polyisocyanat (c) in (a) und/oder (b) dispergiert und danach gegebenenfalls die restliche Menge der Komponente (a) bzw. (b) sowie gegebenenfalls die Komponenten (d) bis (g) zusetzt, mit der Maßgabe, daß das Verhältnis von freien Isocyanatgruppen der desaktivierten Komponente (c) zu Hydroxylgruppen oder zur Summe aus Hydroxyl- und Aminogruppen der Komponenten (a) und (b) 60 : 1 bis 3 : 1 ist.

2. Verfahren zur Herstellung von bei Raumtemperatur lagerstabilen, durch Hitzeeinwirkung zu Urethan-, Isocyanurat- und gegebenenfalls Harnstoffgruppen aufweisenden Formteilen härtbaren Stoffmischungen, enthaltend

(a) ein oder mehrere Polyole mit einem Molekulargewicht von 400 bis 10.000 und einer Funktionalität von 2 bis 8,

(b) 1 bis 50 Gew.-Teile, bezogen auf 100 Gew.-Teile (a), mindestens einer mehrfunktionellen Verbindung mit an aliphatische und/oder cycloaliphatische Reste gebundenen Hydroxylgruppen und/oder an aromatische Reste gebundenen Aminogruppen und einem Molekulargewicht von 62 bis 400 und

(c) ein bei Raumtemperatur festes organisches Polyisocyanat in Form von diskreten Teilchen mit Teilchendurchmessern von 0,1 bis 150 µm, die an der Teilchenoberfläche durch chemische Reaktion mit einem Desaktivierungsmittel desaktiviert sind, sowie gegebenenfalls

(d) Katalysatoren,

(e) Treibmittel,

(f) verstärkend wirkende Materialien und

(g) Hilfsmittel und/oder Zusatzstoffe,

indem man das feste Polyisocyanat in (a) und/oder (b) dispergiert und in situ 0,1 bis 20 Äquivalentprozent der insgesamt im festen Polyisocyanat vorhandenen Isocyanatgruppen mit einem Desaktivierungsmittel umsetzt, welches gegenüber Isocyanatgruppen reaktiver ist als die funktionellen Gruppen der die kohärente Phase bildenden Komponente(n) (a) und/oder (b), und danach gegebenenfalls die restliche Komponente (a) oder (b) und gegebenenfalls die Komponenten (d) bis (g) zusetzt, mit der Maßgabe, daß Verhältnis von freien Isocyanatgruppen der desaktivierten Komponente (c) zu Hydroxylgruppen oder zur Summe aus Hydroxyl- und Aminogruppen der Komponenten (a) und (b) 60 : 1 bis 3 : 1 ist.

3. Bei Raumtemperatur lagerstabile, durch Hitzeeinwirkung härtbare Stoffmischungen, erhältlich nach dem Verfahren von Anspruch 1.

4. Bei Raumtemperatur lagerstabile, durch Hitzeeinwirkung härtbare Stoffmischungen, erhältlich nach dem Verfahren von Anspruch 2.

5. Stoffmischungen nach einem der Ansprüche 3 oder 4, dadurch gekennzeichnet, daß man zur Desaktivierung der Polyisocyanate (c) als Desaktivierungsmittel primäre oder sekundäre aliphatische Amine, Wasser oder Verbindungen verwendet, die Carboxylgruppen, Hydrazidgruppen, Amidgruppen oder alkoholische Hydroxylgruppen enthalten.

6. Stoffmischungen nach einem der Ansprüche 3 bis 5, dadurch gekennzeichnet, daß sie als Treibmittel (e) Wasser und/oder niedermolekulare Halogenkohlenwasserstoffe mit Siedepunkten unter 100° C enthalten.

7. Stoffmischungen nach einem der Ansprüche 3 bis 6, dadurch gekennzeichnet, daß sie als verstärkend wirkende Materialien (f) anorganische Fasern, organische Fasern und/oder faserhaltige Flächengebilde enthalten.

8. Stoffmischungen nach einem der Ansprüche 3 bis 7, dadurch gekennzeichnet, daß sie als Polyisocyanate (c) desaktivierte Polyisocyanate aus der Gruppe der Additionsprodukte aus Diisocyanato-toluolen und Trimethylolpropan, trimerisierten Isocyanuratgruppen enthaltenden Diisocyanato-toluole und Diisocyanato-diphenylmethane und dimerisierten Uretdiongruppen aufweisenden Diisocyanato-toluole, 4,4'- und/oder 2,4'-Diisocyanato-diphenylmethane enthalten.

9. Stoffmischungen nach einem der Ansprüche 3 bis 8, dadurch gekennzeichnet, daß sie als mehrfunktionelle Verbindungen (b) Alkandiole mit 2 bis 6 Kohlenstoffatomen, Alkantriole mit 3 bis 6 Kohlenstoffatomen, alkylsubstituierte Phenylendiamine, 3,3'-di- und/oder 3,3',5,5'-tetraalkylsubstituierte 4,4'-Diamino-diphenylmethane enthalten.

10. Verwendung von Stoffmischungen nach einem der Ansprüche 3 bis 9 zur Herstellung von kompakten oder zelligen, gegebenenfalls verstärkend wirkende Materialien enthaltenden, Urethan-, Isocyanurat- und gegebenenfalls Harnstoffgruppen aufweisenden Formteilen.

**Claims**

1. A process for preparing a composition of matter which is stable to storage at room temperature, curable by the action of heat to moldings having urethane, isocyanurate and optional urea groups, and contains

(a) one or more polyols having a molecular weight of from 400 to 10 000 and a functionality of from 2 to 8,
(b) from 1 to 50 parts by weight, based on 100 parts by weight of (a), of at least one polyfunctional compound having hydroxyl groups bonded to aliphatic and/or cycloaliphatic radicals and/or amino groups bonded to aromatic radicals and a molecular weight of from 62 to 400 and
(c) an organic polyisocyanate which is solid at room temperature and which is present in the form of discrete particles from 0.1 to 150 μm in diameter which have been deactivated at the surface by chemical reaction with a deactivating agent, with or without
(d) a catalyst,
(e) a blowing agent,
(f) a reinforcing material and
(g) an assistant or additive,

by initially reacting from 0.1 to 20 equivalent percent of the total number of isocyanate groups present in the solid polyisocyanate with the deactivating agent in the presence of an inert diluent and dispersing the resulting surface-modified polyisocyanate (c) in (a) or (b) and thereafter, if desired, adding the remaining amount of component (a) or (b) and optionally the components (d) to (g), with the proviso that the ratio of free isocyanate groups of deactivated component (c) to hydroxyl groups or to the total of hydroxyl groups and amino groups of components (a) and (b) is from 60 : 1 to 3 : 1.

2. A process for preparing a composition of matter which is stable to storage at room temperature, curable by the action of heat to moldings having urethane, isocyanurate and optional urea groups, and contains

(a) one or more polyols having a molecular weight of from 400 to 10 000 and a functionality of from 2 to 8,
(b) from 1 to 50 parts by weight, based on 100 parts by weight of (a), of at least one polyfunctional compound having hydroxyl groups bonded to aliphatic and/or cycloaliphatic radicals and/or amino groups bonded to aromatic radicals and a molecular weight of from 62 to 400 and
(c) an organic polyisocyanate which is solid at room temperature and which is present in the form of discrete particles from 0.1 to 150 μm in diameter which have been deactivated at the surface by chemical reaction with a deactivating agent, with or without
(d) a catalyst,
(e) a blowing agent,
(f) a reinforcing material and
(g) an assistant or additive,

by dispersing the solid polyisocyanate in (a) or (b) and reacting in situ from 0.1 to 20 equivalent percent of the total number of isocyanate groups present in the solid polyisocyanate with a deactivating agent which is more reactive to isocyanate groups than the functional groups of the coherent phase component (a) or (b) and thereafter, if desired, adding the remainder of components (a) or (b) and optionally the components (d) to (g), with the proviso that the ratio of free isocyanate groups of deactivated component (c) to hydroxyl groups or to the total of hydroxyl groups and amino groups of components (a) and (b) is from 60 : 1 to 3 : 1.

3. A composition of matter which is stable to storage at room temperature, curable by the action of heat and obtainable by the process of claim 1.

4. A composition of matter which is stable to storage at room temperature, curable by the action of heat and obtainable by the process of claim 2.

5. A composition of matter as claimed in either of claims 3 and 4, wherein the polyisocyanate (c) has been deactivated with a deactivating agent selected from the group consisting of the primary and secondary aliphatic amines, water and compounds which contain carboxyl groups, hydrazide groups, amide groups or alcoholic hydroxyl groups.

6. A composition of matter as claimed in any of claims 3 to 5, which contains a blowing agent (e) comprising water or a low molecular weight halohydrocarbon having a boiling point below 100°C.

7. A composition of matter as claimed in any of claims 3 to 6, which contains a reinforcing material (f) comprising inorganic fibers, organic fibers or a fiber containing sheetlike structure.

8. A composition of matter as claimed in any of claims 3 to 7, wherein the polyisocyanate (c) is a deactivated polyisocyanate from the group of the addition products of diisocyanatotoluenes and trimethylolpropane,

trimerized isocyanurato-containing diisocyanatotoluenes and diisocyanatodiphenylmethanes, and dimerized uretdionyl-containing diisocyanatotoluenes and 4,4'- or 2,4'-diisocyanatodiphenylmethanes.

9. A composition of matter as claimed in any of claims 3 to 8, wherein the polyfunctional compound (b) is an alkanediol of from 2 to 6 carbon atoms, an alkanetriol of from 3 to 6 carbon atoms, an alkyl-substituted phenylenediamine, or a 3,3'-dialkyl- or 3,3',5,5'-tetraalkyl-substituted 4,4'-diaminodiphenylmethane.

10. The use of a composition of matter as claimed in any of claims 3 to 9 for producing a compact or cellular molding with urethane, isocyanurate and optional urea groups which may contain a reinforcing material.

**Revendications**

1. Procédé de préparation de mélanges de matières stables à la conservation à la température ambiante, durcissables, sous l'effet de la chaleur, en articles moulés présentant des radicaux uréthanne, isocyanurate et éventuellement urée, qui contiennent

(a) un ou plusieurs polyols possédant un poids moléculaire de 400 à 10 000 et une fonctionnalité de 2 à 8,

(b) 1 à 50 parties en poids , par rapport à 100 parties en poids de (a), d'au moins un composé polyfonctionnel comportant des radicaux hydroxyle, liés à des groupes aliphatiques et/ou cycloaliphatiques, et/ou des radicaux amino liés à des groupes aromatiques, et d'un poids moléculaire de 62 à 400, et

(c) un polyisocyanate organique, solide à la température ambiante, sous forme de particules distinctes d'un diamètre de 0,1 à 150 µm, qui sont désactivées en surface par réaction chimique sur un agent de désactivation,

(d) des catalyseurs,

(e) des agents porogènes,

(f) des matières à activité de renforcement, et

(g) des adjuvants et/ou des additifs,

conformément auquel on fait réagir d'abord de 0,1 à 20 équivalents-pourcent des radicaux isocyanate du polyisocyanate solide, présents au total, sur l'agent de désactivation, en présence d'un diluant inerte, et on disperse le polyisocyanate (c) modifié en surface dans (a) et/ou (b) et on ajoute ensuite éventuellement la quantité résiduelle des composante (a) et (b), comme éventuellement aussi les composants (d) à (g), avec la condition que le rapport des radicaux isocyanate libres du composant (c) désactivé aux radicaux hydroxyle ou à la somme des radicaux hydroxyle et amino des composants (a) et (b) varie de 60 : 1 à 3 : 1.

2. Procédé de préparation de mélanges de matières stables à la conservation à la température ambiante, durcissables, sous l'effet de la chaleur, en articles moulés présentant des radicaux uréthanne, isocyanurate et éventuellement urée, qui contiennent

(a) un ou plusieurs polyols possédant un poids moléculaire de 400 à 10 000 et une fonctionnalité de 2 à 8,

(b) 1 à 50 parties en poids, par rapport à 100 parties en poids de (a), d'au moins un composé polyfonctionnel comportant des radicaux hydroxyle liés à des groupes aliphatiques et/ou cycloaliphatiques et/ou des radicaux amino liés à des groupes aromatiques et possédant un poids moléculaire de 62 à 400 et

(c) un polyisocyanate organique, solide à la température ambiante, sous forme de particules distinctes d'un diamètre de 0,1 à 150 µm, qui sont désactivées en surface par une réaction chimique avec un agent de désactivation, comme éventuellement aussi

(d) des catalyseurs,

(e) des agents porogènes,

(f) des matières à activité de renforcement, et

(g) des adjuvants et/ou des additifs,

conformément auquel on disperse le polyisocyanate solide dans (a) et/ou (b) et on fait réagir, in situ, 0,1 à 20 équivalents-pourcent des radicaux isocyanate présents au total dans le polyisocyanate solide, sur un agent de désactivation qui est plus réactif vis-à-vis des radicaux isocyanate que les radicaux fonctionnels du ou des composants qui forment la phase cohérente (a) et/ou (b), et on ajoute ensuite éventuellement les composants (a) ou (b) résiduels et éventuellement les composants (d) à (g), avec la condition que le rapport des radicaux isocyanate libres du composant (c) désactivé aux groupes hydroxyle ou à la somme des groupes hydroxyle et amino des composants (a) et (b) varie de 60 : 1 à 3 : 1.

3. Mélanges de matières stables à la conservation à la température ambiants, durcissables sous l'effet de la chaleur, pouvant être obtenus par mise en oeuvre du procédé suivant la revendication 1.

4. Mélanges de matières stables à la conservation à la température ambiante, durcissables sous l'effet de la chaleur, obtenus par mise en oeuvre du procédé suivant la revendication 2.

5. Mélanges de matières suivant l'une des revendications 3 et 4, caractérisés en ce que, pour la désactivation des polyisocyanates (c), on utilise à titre d'agents de désactivation, des amines aliphatiques primaires ou secondaires, de l'eau ou des composés qui contiennent des radicaux carboxyle, des radicaux hydrazide, des radicaux amide ou des radicaux hydroxyle alcoolique.

6. Mélanges de matières suivant l'une des revendications 3 à 5, caractérisés en ce qu'ils contiennent, à titre

d'agent porogène (e) , de l'eau et/ou des halogénohydrocarbures à faibles poids moléculaires, possédant des points d'ébullition inférieurs à 100° C.

7. Mélanges de matières suivant l'une des revendications 3 à 6, caractérisés en ce qu'ils contiennent, à titre de matières à activité de renforcement (f), des fibres inorganiques, des fibres organiqus et/ou des articles plats contenant des fibres.

8. Mélanges de matières suivant l'une des revendications 3 à 7, caractérisés en ce qu'ils contiennent, à titre de polyisocyanates (c), des polyisocyanates désactivés appartenant à la classe des produits d'addition de diisocyanato-toluènes et de triméthylolpropane, de diisocyanato-toluènes contenant des radicaux isocyanurate trimérisé et de diisocyanato-diphénylméthanes et de diisocyanato-toluènes présentant des radicaux uretdione dimérisé et de 4,4'- et/ou 2,4'-diisocyanato-diphénylméthanes.

9. Mélanges de matières suivant l'une des revendications 3 à 8, caractérisés en ce qu'à titre de composés polyfonctionnels (b), ils contiennent des alcanediols possédant de 2 à 6 atomes de carbone, des alcanetriols possédant de 3 à 6 atomes de carbone, des phénylènediamines alkylsubstituées, des 4,4'-diamino-diphénylméthanes à substitution 3,3'- di- et/ou 3,3',5,5'-tétraalkylique.

10. Utilisation de mélanges de matières suivant l'une des revendications 3 à 9, pour la fabrication d'articles moulés, présentant des radicaux uréthanne, isocyanurate et éventuellement urée, compacts ou cellulaires, contenant éventuellement des matières à activité de renforcement.